(19) Europäisches Patentamt
European Patent Office
Office européen des brevets

(11) Veröffentlichungsnummer : **0 137 359**
**B1**

(12) # EUROPÄISCHE PATENTSCHRIFT

(45) Veröffentlichungstag der Patentschrift : **09.11.88**

(21) Anmeldenummer : **84111053.9**

(22) Anmeldetag : **17.09.84**

(51) Int. Cl.⁴ : **C 08 G 63/66**, C 08 G 63/20, C 08 G 63/76, C 08 G 63/68, D 06 M 15/507

(54) **Polyetherester, ihre Herstellung und ihre Verwendung zur Textilbehandlung.**

(30) Priorität : **26.09.83 DE 3334798**

(43) Veröffentlichungstag der Anmeldung : **17.04.85 Patentblatt 85/16**

(45) Bekanntmachung des Hinweises auf die Patenterteilung : **09.11.88 Patentblatt 88/45**

(84) Benannte Vertragsstaaten : **CH DE FR GB IT LI**

(56) Entgegenhaltungen :
**DE-A- 2 737 239**
**GB-A- 847 090**
**GB-A- 856 917**
**GB-A- 1 048 893**
**GB-A- 1 499 759**
**US-A- 3 457 206**
**US-A- 4 216 260**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Müller, Hanns Peter, Dr.**
**Im Kerberich 6**
**D-5068 Odenthal (DE)**
Erfinder : **Schäfer, Karl**
**Kölner Strasse 133**
**D-5090 Leverkusen 3 (DE)**

**EP 0 137 359 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der Erfindung sind wasserlösliche oder in Wasser dispergierbare segmentierte Polyetherester einer überwiegend linearen Molekularstruktur mit einem Gehalt an

a) Terephthalatgruppen der Formel

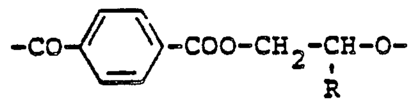

(I)

worin R Wasserstoff oder Methyl bedeutet, von 3-45 Gew.-%,

b) Terephthalatgruppen der Formel

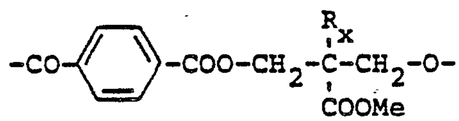

(II)

worin

$R_x$ Wasserstoff oder $C_1$-$C_4$-Alkyl und

Me ein Alkali- oder Ammoniumion bedeuten, von 0,4-6 Gew.-% und

c) endständigen Polyalkylenglykol-Gruppen von 49-96,6 Gew.-%, jeweils bezogen auf das Gewicht des Polyetheresters, ihre Herstellung und ihre Verwendung zur Veredlung von Textilgut aus Synthesefasern, insbesondere Polyesterfasern und Mischungen aus Synthesefasern mit Cellulosefasern oder keratinhaltigen Fasern.

Das mittlere Molekulargewicht der Polyetherester liegt bei 500-11 000, vorzugsweise bei 1 000-6 000.

In a) kann ein Anteil, beispielsweise bis zu 25 Mol-%, der Alkylenoxy-Gruppe durch Reste anderer Diole, bevorzugt $C_3$-$C_8$-Glykole, ersetzt werden. Ebenso kann in b) ein Anteil, beispielsweise bis zu 50 Mol-%, der COOMe-Gruppe durch eine Sulfonat-, Cyan-, Carbonsäureester- oder Carbonsäureamid-Gruppe ersetzt werden.

Bevorzugt sind Polyetherester, in deren vorstehend genannten Segmenten

R für Wasserstoff,

Me für Li, Na, K oder

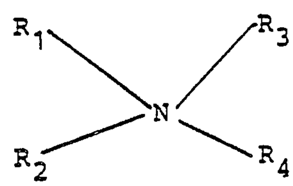

und $R_1$, $R_2$, $R_3$ und $R_4$ für Wasserstoff oder $C_1$-$C_{20}$-Alkyl, das durch OH oder $NH_2$ substituiert sein kann, stehen, und deren Anteil c) einen Ethylen- oder Propylenglykol-ether oder einen gemischten Ethylenpropylenglykolether der Formel

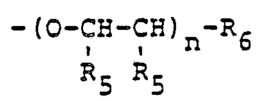

(III)

darstellt, worin

$R_5$ für Wasserstoff und/oder Methyl,

$R_6$ für $C_1$-$C_{20}$-Alkoxy oder Di-$C_1$-$C_{20}$-alkylamino und

n für 10-220, insbesondere 15-20 stehen.

Von diesen Polyetherestern sind wiederum diejenigen bevorzugt, deren Gehalt an

a) 10-20 Gew.-%,
b) 1- 3 Gew.-% und,
c) 70-89 Gew.-% beträgt.

und die Komponente c) einen Polyethylenglykol-monoalkylether oder einen gemischten Polyethylenpropylen-glykol-monoalkylether darstellt.

Die Herstellung der Polyetherester erfolgt nach an sich bekannten Methoden. Vorzugsweise erfolgt sie nach dem Prepolymerprinzip, d. h. durch Umsetzung einer überschüssigen Menge an Ethylenglykol

und einem Salz der Säure der Formel

$$\begin{array}{c} R_x \\ | \\ HO-CH_2-C-CH_2-OH \\ | \\ COOH \end{array} \qquad (IV)$$

mit Terephthalsäuredimethylester in Gegenwart von Veresterungskatalysatoren zu endständig OH-Gruppen aufweisenden Prepolymeren und anschließende Kondensation mit einem monofunktionellen, eine Hydroxylgruppe aufweisenden Polyalkylenglykol.

Ethylenglykol und die Säure (IV) können gleichzeitig oder sukzessive mit dem Terephthalsäureester umgesetzt werden. Das Mengenverhältnis wird dabei so gewählt, daß pro Hydroxylgruppe des Glykols $0{,}1 \cdot 10^{-4}$ bis 0,21 Carboxylgruppen aus (IV) vorliegen.

Ein Teil des Alkylenglykols, beispielsweise bis zu 25 Mol-%, kann dabei durch andere Diole ersetzt werden wie Propandiol-1,3, Butandiol-1,4, Butandiol-1,3, Butandiol-1,2, Neopentylglykol, Hexandiol-1,6, 2-Ethylhexandiol-1,3 und/oder Mischungen dieser Diole.

Bevorzugte Säuren (IV) sind Dimethylolessigsäure, $\alpha,\alpha$-Dimethylol-propionsäure oder $\alpha,\alpha$-Dimethylol-n-valeriansäure und insbesondere $\alpha,\alpha$-Dimethylol-propionsäure.

Ein Teil der Säuren (IV), beispielsweise bis zu 50 Mol-%, kann dabei durch Verbindungen ersetzt werden, die anstelle der Carbonsäuregruppe eine $SO_3H$—, CN—, $CONHR_7$— oder $CON(R_7)_2$-Gruppe (mit $R_7 = C_1$-$C_4$-Alkyl) haben.

Die Herstellung der Prepolymeren erfolgt im allgemeinen bei einer Temperatur von 140-240 °C, bevorzugt 160-210 °C.

Als Katalysatoren werden dabei die als Beschleuniger für Polykondensationen bekannten Verbindungen verwendet (R.W. Wilfong, J. Polym. Sci. 54, 385 (1961)).

Zu den Katalysatoren zählen Verbindungen des Zinks, Mangans, Kobalts, Antimons, Germaniums, Titans und Zinns, wie Zinn-II-chlorid, Antimontrioxid, Antimontrichlorid, Antimontriacetat, Germaniumdioxid und- tetrachlorid und Tetraalkyltitansäureester. Bevorzugt ist Manganacetat.

Nach der Prepolymerbildung erfolgt dann die Umsetzung mit den monofunktionellen Polyethern.

Die monofunktionellen Polyalkylenglykol-Derivate können durch Polymerisation von Epoxiden wie Ethylenoxid, Propylenoxid, Butylenoxid, Tetrahydrofuran, Styroloxid oder Epichlorhydrin in Gegenwart von Lewis-Katalysatoren wie $BF_3$, gegebenenfalls im Gemisch oder nacheinander an Startkomponenten mit reaktionsfähigen Wasserstoffatom hergestellt werden. Als Startkomponenten werden beispielsweise Alkohole und Amine wie Methanol, Ethanol, Propanol, Isopropanol, Butanol, Butylglykol oder Diethylenglykol-monobutylether, Dibutylamin oder Dimethylethanolamin verwendet. Vielfach sind solche Polyether bevorzugt, die überwiegend primäre OH-Gruppen tragen.

Die Polyether besitzen vorzugsweise ein mittleres Molekulargewicht von 400-10 000, bevorzugt von 700-5 000.

Die Umsetzung der Prepolymeren mit diesen Polyethern erfolgt in der Schmelze, bevorzugt unter vermindertem Druck im Vakuum (0,133-53,2 mbar) bei Temperaturen von 140-280 °C bevorzugt 160-260 °C. Nachdem die berechnete überschüssige Menge niedermolekularen Diols abdestilliert ist, wird unter Rühren auf 100-110 °C abgekühlt, und die segmentierten Polyetherester werden aus der Schmelze über eine Kühlwalze in granulierter Form erhalten, oder die 100-110 °C heiße Schmelze wird in auf 60 °C aufgeheiztes Wasser unter Rühren eindosiert. Auf diese Weise entstehen wäßrige Dispersionen. Sie sind hervorragend lagerstabil und beständig in Behandlungsbädern.

Bei den neuen Polyetherestern handelt es sich um sehr lichtbeständige Verbindungen. Sie finden Verwendung zur Veredlung von Textilgut aus Synthesefasern oder keratinhaltigen Fasern. Bevorzugt zu behandelnde Synthesefasern sind Polyesterfasern wie Polyethylenterephthalatfasern.

Die Applikation erfolgt aus wäßriger Flotte nach dem Ausziehverfahren, durch Tauchen und Abquetschen des Textilgutes oder nach dem Sprühverfahren. Bevorzugt ist das Ausziehverfahren. Dabei werden Textilien in einem Flottenverhältnis von 1 : 10 bis 1 : 50 behandelt. Das mit den wäßrigen Flotten behandelte Textilgut wird wie üblich durch Abschleudern oder Abquetschen entwässert und bei 100-120 °C vorgetrocknet und zweckmäßig während 180-20 Sekunden bei 130-190 °C nacherhitzt. Das entwässerte Textilgut kann aber auch je nach Warenqualität direkt bei 140-190 °C während 180-30 Sekunden getrocknet werden.

Die Menge an eingesetztem Polyetherester kann je nach gewünschtem Effekt in weiten Grenzen schwanken. Sie liegt beispielsweise bei 0,2-3 % und vorzugsweise bei 0,5-1 % bezogen auf das Gewicht des Textilgutes.

Der Ausrüstungsprozeß kann vor, nach oder zusammen mit dem Färbeprozeß oder der Behandlung mit optischen Aufhellern erfolgen.

Die Polyetherester können auch gemeinsam mit Knitterfestprodukten oder mit Mitteln zur filzfreien Ausrüstung von keratinhaltigen Fasermaterialien, beispielsweise mit Polyurethanprepolymeren mit geblockten Isocyanatgruppen, appliziert werden.

Mit Hilfe der neuen Polyetherester kann das Textilgut mit einer permanenten pflegeleichten Ausrüstung versehen werden. Die Trageeigenschaften der Textilien werden durch diese Ausrüstung

erheblich verbessert. Sie erfahren eine Erhöhung der Hydrophile, eine Verbesserung der schmutzabweisenden und antielektrostatischen Eigenschaften und einen verbesserten weichen Griff.

Mittel auf Basis bestimmter Polyetherester ohne seitenständige, aliphatische gebundene Carboxylat-Gruppe zur pflegeleichten Ausrüstung und Erhöhung des Tragekomforts von Textilgut aus Synthesefasern sind bereits bekannt.

Sie werden beispielsweise aus zum Spinnen geeignetem Polyethylenterephthalat durch Umsatz mit Polyethylenglykol oder den Monoalkylethern eines solchen Polyethylenglykols und gegebenenfalls anionischen oberflächenaktiven Verbindungen erhalten und werden in den US-Patentschriften 3 583 878, 3 712 873 und 4 210 417, der deutschen Offenlegungsschrift 21 29 993 und der britischen Patentschrift 1 499 759 beschrieben.

In den Beispielen werden als monofunktionelle Polyether folgende Verbindungen eingesetzt :

Polyether A : Additionsprodukt aus Butanol und Ethylenoxid ; $\overline{MG}$ 2 000 ; OH-Zahl 28 ;

Polyether B : Additionsprodukt aus Butanol und Ethylenoxid ; $\overline{MG}$ 1 000 ; OH-Zahl 56 ;

Polyether C : Additionsprodukt aus Butanol und Ethylen-/Propylenoxid im Verhältnis 1 : 1 ; $\overline{MG}$ 2620 ; OH-Zahl 21,4.

## Beispiel 1

In einem 2 Ltr.-Dreihalskolben (Kessel 1), der mit Innenthermometer, Rührer, Veresterungsaufsatz und Destillationsbrücke versehen ist, werden 181,4 g (2,925 mol) Ethylenglykol, 10,05 (0,075 mol) Dimethylolpropionsäure und 4,0 g (0,07125 mol) KOH-Plätzchen innerhalb einer halben Stunde bei Raumtemperatur unter Stickstoff gelöst. Dabei erwärmt sich der Ansatz geringfügig. In diese Lösung werden dann 194 g (1 mol) Terephthalsäuredimethylester und 0,38 g Mangan(II) acetat · $4H_2O$ gegeben. Unter schwachen Stickstoffstrom wird die Mischung unter Rühren auf 140 °C aufgeheizt. Dabei entsteht eine klare Schmelze. Zur Umesterung wird der Ansatz dann innerhalb von 3 Stunden von 160 auf 180 °C und anschließend in einer weiteren Stunde bis auf 210 °C Innentemperatur aufgeheizt, wobei 63 bis 66 g Methanol (ber. 64 g $CH_3$—OH) im Gemisch mit wenig Ethylenglykol abdestillieren. Nachdem die berechnete Menge Methanol abdestilliert ist, wird der Ansatz unter Rühren und Stickstoff auf 120 °C abgekühlt. Bei dieser Temperatur setzt man dem Ansatz 1 000 g (0,5 mol) Polyether A in geschmolzener Form (100-120 °C) zu, legt Wasserstrahlvakuum an die Apparatur und heizt den Ansatz dann innerhalb von 1,5 Stunden langsam bis auf 260 °C Innentemperatur auf, wobei kontinuierlich zunächst das freie dann das durch Reaktion gebildete Ethylenglykol abdestilliert. Nachdem 115-120 g (ber. 124 g) Ethylenglykol abdestilliert sind und eine Innentemperatur von 260 °C erreicht ist, wird die Heizung abgestellt und der Ansatz unter Rühren und Stickstoff auf 100-110 °C abgekühlt.

In einem weiteren 10 Ltr.-Dreihalskolben (Kessel 2) werden 5 083 g destilliertes Wasser unter Rühren und Stickstoff auf 60 °C aufgeheizt. Unter Rühren wird nun die 100-110 °C heiße Schmelze aus Kessel 1 in das vorgelegte auf 60 °C erwärmte Wasser des Kessels 2 langsam eindosiert. Nach vollständiger Zugabe wird die entstandene wäßrige Dispersion noch 1 Stunde ohne weitere Heizung nachgerührt. Bei Raumtemperatur wird der Kesselinhalt über eine grobe Fritte oder Filtertuch abgelassen. Auf diese Weise erhält man eine lagerstabile 20 % Festkörper enthaltende, weiße Dispersion mit einer Viskosität von $\eta_{25\,°C}$ = 48 mPas.

## Beispiel 2

In einem 1 Ltr.-Dreihalskolben (Kessel 1), der mit Innenthermometer, Rührer, Veresterungsaufsatz und Destillationsbrücke versehen ist, werden 68,2 g (1,1 mol) Ethylenglykol, 13,4 g (0,1 mol) Dimethylolpropionsäure, 5,33 g (0,095 mol) KOH-Plätzchen innerhalb einer halben Stunde bei Raumtemperatur unter Stickstoff gelöst. In diese Lösung werden dann 77,4 g (0,4 mol) Terephthalsäuredimethylester und 0,15 g Mangan (II)acetat · $4H_2O$ gegeben. Unter schwachem Stickstoffstrom wird die Mischung unter Rühren auf 140 °C aufgeheizt. Dabei entsteht eine klare Schmelze. Zur Umesterung wird der Ansatz dann innerhalb von 4 Stunden von 160 auf 210 °C Innentemperatur aufgeheizt, wobei 25,7 g Methanol (ber. 25,6 g $CH_3$—OH) im Gemisch mit wenig Ethylenglykol abdestillieren. Nachdem die berechnete Menge Methanol abdestilliert ist, wird der Ansatz unter Rühren und Stickstoff auf 120 °C abgekühlt. Bei dieser Temperatur setzt man dem Ansatz 400 g (0,2 mol) Polyether A in geschmolzener Form (100-120 °C) zu, legt Wasserstrahlvakuum an die Apparatur und heizt den Ansatz dann innerhalb von 1,5 Stunden langsam bis auf 260 °C Innentemperatur auf, wobei kontinuierlich zunächst das freie dann das durch Reaktion gebildete Ethylenglykol abdestilliert. Nachdem 42,5 g (ber. 49,6 g) Ethylenglykol abdestilliert sind und eine Innentemperatur von 260 °C erreicht ist, wird die Heizung abgestellt und der Ansatz unter Rühren und Stickstoff auf 100-110 °C abgekühlt. In die Schmelze werden dann 9,31 g (0,095 mol) 50 %ige Schwefelsäure und 26,89 g (0,095 mol) N-Methyl-Stearylamin zugegeben.

In einem weiteren 6 Ltr. Dreihalskolben (Kessel 2) werden 2970 g destilliertes Wasser unter Rühren und Stickstoff auf 60 °C aufgeheizt. Unter Rühren wird nun die 100-110 °C heiße Schmelze aus Kessel 1 in das vorgelegte auf 60 °C erwärmte Wasser des Kessels 2 langsam eindosiert. Nach vollständiger Zugabe wird die entstandene wäßrige Dispersion noch 1 Stunde ohne weitere Heizung nachgerührt. Auf diese Weise erhält man eine lagerstabile 15 % Festkörper enthaltende, weiße Dispersion mit einer

Viskosität $\eta_{25\,°C}$ = 16,1 mPas.

Beispiel 3

In einem 1 Ltr.-Dreihalskolben (Kessel 1), der mit Innenthermometer, Rührer, Veresterungsaufsatz und Destillationsbrücke versehen ist, werden 68,2 g (1,1 mol) Ethylenglykol, 13,4 g (0,1 mol) Dimethylolpropionsäure, 5,33 g (0,095 mol) KOH-Plätzchen innerhalb einer halben Stunde bei Raumtemperatur unter Stickstoff gelöst. In diese Lösung werden dann 77,4 g (0,4 mol) Terephthalsäuredimethylester und 0,15 g Mangan (II) acetat · $4H_2O$ gegeben. Unter schwachem Stickstoffstrom wird die Mischung unter Rühren auf 140 °C aufgeheizt. Dabei entsteht eine klare Schmelze. Zur Umesterung wird der Ansatz dann innerhalb von 4 Stunden von 160 auf 210 °C Innentemperatur aufgeheizt, wobei 27,3 g Methanol (ber. 25,6 g $CH_3$—OH) im Gemisch mit wenig Ethylenglykol abdestillieren. Nachdem die berechnete Menge Methanol abdestilliert ist, wird der Ansatz unter Rühren und Stickstoff auf 120 °C abgekühlt. Bei dieser Temperatur setzt man dem Ansatz 400 g (0,2 mol) Polyether A in geschmolzener Form (100-120 °C) zu, legt Wasserstrahlvakumm an die Apparatur und heizt den Ansatz dann innerhalb von 1,5 Stunden langsam bis auf 260 °C Innentemperatur auf, wobei kontinuierlich zunächst das freie dann das durch Reaktion gebildete Ethylenglykol abdestilliert. Nachdem 46,7 g (ber. 49,6 g) Ethylenglykol abdestilliert sind und eine Innentemperatur von 260 °C erreicht ist, wird die Heizung abgestellt und der Ansatz unter Rühren und Stickstoff fauf 140 °C abgekühlt. Die heiße Schmelze wird auf ein Teflonblech ausgegossen und erstarrt zu einem wachsartigen Festprodukt vom Fp. 50-60 °C. Das Festprodukt wird in Stücke gebrochen und kann in dieser Form direkt als Textilausrüstungsmittel verwendet werden oder es wird gemäß Beispiel 1 aus der Schmelze eine wäßrige Dispersion hergestellt.

Beispiel 4

In einem 1 Ltr.-Dreihalskolben (Kessel 1), der mit Innenthermometer, Rührer, Veresterungsaufsatz und Destillationsbrücke versehen ist, werden 72,54 g (1,17 mol) Ethylenglykol, 2,01 g (0,015 mol) Dimethylolpropionsäure, 0,8 g (0,01425 mol) KOH-Plätzchen innerhalb einer halben Stunde bei Raumtemperatur unter Stickstoff gelöst. In die Lösung gibt man dann 6,45 g (0,015 mol) eines propoxylierten Addukts aus 2-Butendiol-1,4 und $NaHSO_3$ (Molekulargewicht 430) und 77,4 g (0,4 mol) Terephthalsäuredimethylester und 0,15 g Mangan(II)acetat · $4H_2O$ zu. Unter schwachem Stickstoffstrom wird die Mischung unter Rühren auf 140 °C aufgeheizt. Dabei entsteht eine klare Schmelze. Zur Umesterung wird der Ansatz dann innerhalb von 3 Stunden von 160 auf 180 °C erhitzt und anschließend in einer weiteren Stunde bis auf 220 °C Innentemperatur aufgeheizt, wobei 24 g Methanol (ber. 25,6 g $CH_3$—OH) im Gemisch mit wenig Ethylenglykol abdestillieren. Nachdem die berechnete Menge Methanol abdestilliert ist, wird der Ansatz unter Rühren und Stickstoff auf 120 °C abgekühlt. Bei dieser Temperatur setzt man dem Ansatz 400 g (0,2 mol) Polyether A in geschmolzener Form (100-120 °C) zu, legt Wasserstrahlvakuum an die Apparatur und heizt den Ansatz dann innerhalb von 1,5 Stunden langsam bis auf 260 °C Innentemperatur auf, wobei kontinuierlich zunächst das freie dann das durch Reaktion gebildete Ethylenglykol abdestilliert. Nachdem 46,5 g (ber. 49,6 g) Ethylenglykol abdestilliert sind und eine Innentemperatur von 260 °C erreicht ist, wird die Heizung abgestellt und der Ansatz unter Rühren und Stickstoff auf 100-110 °C abgekühlt.

In einem weiteren 6 Ltr.-Dreihalskolben (Kessel 2) werden 2 740 g destilliertes Wasser unter Rühren und Stickstoff auf 60 °C aufgeheizt. Unter Rühren wird nun die 100-110 °C heiße Schmelze aus Kessel 1 in das vorgelegte auf 60 °C erwärmte Wasser des Kessels 2 langsam eindosiert. Nach vollständiger Zugabe wird die entstandene wäßrige Dispersion noch 1 Stunde ohne weitere Heizung nachgerührt. Bei Raumtemperatur wird der Kesselinhalt über eine große Fritte und Filtertuch abgelassen. Auf diese Weise erhält man eine lagerstabile 15 % Festkörper enthaltende, weiße Dispersion mit einer Viskosität von $\eta_{25\,°C}$ = 20,3 mPas.

Beispiel 5

In einem 1 Ltr.-Dreihalskolben (Kessel 1), der mit Innenthermometer, Rührer, Veresterungsaufsatz und Destillationsbrücke versehen ist, werden 71,92 g (1,16 mol) Ethylenglykol, 5,26 g (0,02 mol) eines Fettalkoholgemisches bestehend aus $C_{14}H_{29}OH$ bis $C_{22}H_{45}OH$ (2 % $C_{14}$, ca. 51 % $C_{16}$, ca. 28 % $C_{18}$, ca. 14 % $C_{20}$, 3 % $C_{22}$), 4,02 g (0,03 mol) Dimethylolpropionsäure, 1,6 g (0,0785 mol) KOH-Plätzchen innerhalb einer halben Stunde bei Raumtemperatur unter Stickstoff gelöst. In diese Lösung werden dann 77,4 g (0,4 mol) Terephthalsäuredimethylester und 0,15 g Mangan(II)acetat · 4 $H_2O$ gegeben. Unter schwachem Stickstoffstrom wird die Mischung unter Rühren auf 140 °C aufgeheizt. Dabei entsteht eine klare Schmelze. Zur Umesterung wird der Ansatz dann innerhalb von 3 Stunden von 160-180 °C erhitzt und anschließend in einer weiteren Stunde bis auf 210 °C Innentemperatur aufgeheizt, wobei 25,2 g Methanol (ber. 25,6 g $CH_3$—OH) im Gemisch mit wenig Ethylenglykol abdestillieren. Nachdem die berechnete Menge Methanol abdestilliert ist, wird der Ansatz unter Rühren und Stickstoff auf 120 °C abgekühlt. Bei dieser Temperatur setzt man dem Ansatz 400 g (0,2 mol) Polyether A in geschmolzener Form (100-120 °C) zu, legt Wasserstrahlvakuum an die Apparatur und heizt den Ansatz dann innerhalb

von 1,5 Stunden langsam bis auf 260 °C Innentemperatur auf, wobei kontinuierlich zunächst das freie dann das durch Reaktion gebildete Ethylenglykol abdestilliert. Nachdem 46 g (ber. 49,6 g) Ethylenglykol abdestilliert sind und eine Innentemperatur von 260 °C erreicht ist, wird die Heizung abgestellt und der Ansatz unter Rühren und Stickstoff auf 140 °C abgekühlt.

Die helle gelbliche Schmelze wird anschließend auf ein Teflonblech gegossen und erstarrt zu einem wachsartigen Feststoff vom Fp. 50-60 °C.

30 g des so erhaltenen Festprodukts werden bei 80-90 °C geschmolzen, in die Schmelze werden 160 g Wasser eindosiert. Auf diese Weise entsteht eine 15 % Festkörper enthaltende wäßrige Dispersion.

## Beispiel 6

In einem 1 Ltr.-Dreihalskolben (Kessel 1), der mit Innenthermometer, Rührer, Veresterungsaufsatz und Destillationsbrücke versehen ist, werden 181,4 g (2,925 mol) Ethylenglykol, 10,05 g (0,075 mol) Dimethylolpropionsäure, 4,0 g (0,07125 mol) KOH-Plätzchen innerhalb einer halben Stunde bei Raumtemperatur unter Stickstoff gelöst. Dabei erwärmt sich der Ansatz geringfügig. In diese Lösung werden dann 194 g (1 mol) Terephthalsäuredimethylester und 0,38 g Mangan(II)acetat · $4H_2O$ gegeben. Unter schwachem Stickstoffstrom wird die Mischung unter Rühren auf 140 °C aufgeheizt. Dabei entsteht eine klare Schmelze. Zur Umesterung wird der Ansatz dann innerhalb von 3 Stunden von 160 auf 180 °C erhitzt und anschließend in einer weiteren Stunde bis auf 210 °C Innentemperatur aufgeheizt, wobei 63 bis 66 g Methanol (ber. 64 g $CH_3$—OH) im Gemisch mit wenig Ethylenglykol abdestillieren. Nachdem die berechnete Menge Methanol abdestilliert ist, wird der Ansatz unter Rühren und Stickstoff auf 120 °C abgekühlt. Bei dieser Temperatur setzt man dem Ansatz 500 g (0,5 mol) Polyether B in geschmolzener Form (100-120 °C) zu, legt Wasserstrahlvakuum an die Apparatur und heizt den Ansatz dann innerhalb von 1,5 Stunden langsam bis auf 260 °C Innentemperatur auf, wobei kontinuierlich zunächst das freie dann das durch Reaktion gebildete Ethylenglykol abdestilliert. Nachdem 115-120 g (ber. 124 g) Ethylenglykol abdestilliert sind und eine Innentemperatur von 260 °C erreicht ist, wird die Heizung abgestellt und der Ansatz unter Rühren und Stickstoff auf 100-110 °C abgekühlt.

In einem weiteren 6 Ltr.-Dreihalskolben (Kessel 2) werden 3977 g destilliertes Wasser unter Rühren und Stickstoff auf 60 °C aufgeheizt. Unter Rühren wird nun die 100-110 °C heiße Schmelze aus Kessel 1 in das vorgelegte auf 60 °C erwärmte Wasser des Kessels 2 langsam eindosiert. Nach vollständiger Zugabe wird die entstandene wäßrige Dispersion noch 1 Stunde ohne weitere Heizung nachgerührt. Bei Raumtemperatur wird der Kessel-inhalt über eine große Fritte oder Filtertuch abgelassen. Auf diese Weise erhält man eine lagerstabile 15 % Festkörper enthaltende, weiße Dispersion mit einer Viskosität von $\eta_{25\,°C}$ = 30 mPas.

## Beispiel 7

In einem 2 Ltr.-Dreihalskolben (Kessel 1), der mit Innenthermometer, Rührer, Veresterungsaufsatz und Destillationsbrücke versehen ist, werden 181,4 g (2,925 mol) Ethylenglykol, 10,05 g (0,075 mol) Dimethylolpropionsäure, 4,0 g (0,07125 mol) KOH-Plätzchen innerhalb einer halben Stunde bei Raumtemperatur unter Stickstoff gelöst. Dabei erwärmt sich der Ansatz gerinfügig. In diese Lösung werden dann 194 g (1 mol) Terephthalsäuredimethylester und 0,38 g Mangan(II)acetat · 4 $H_2O$ gegeben. Unter schwachem Stickstoffstrom wird die Mischung unter Rühren auf 140 °C aufgeheizt. Dabei entsteht eine klare Schmelze. Zur Umesterung wird der Ansatz dann innerhalb von 3 Stunden von 160 auf 180 °C erhitzt und anschließend in einer weiteren Stunde bis auf 210 °C Innentemperatur aufgeheizt, wobei 63 bis 66 g Methanol (ber. 64 g $CH_3$—OH) im Gemisch mit wenig Ethylenglykol abdestillieren. Nachdem die berechnete Menge Methanol abdestilliert ist, wird der Ansatz unter Rühren und Stickstoff auf 120 °C abekühlt. Bei dieser Temperatur setzt man dem Ansatz 1 310 g (0,5 mol) auf 100 °C erhitzten Polyether C zu, legt Wasserstrahlvakuum an die Apparatur und heizt den Ansatz dann innerhalb von 1,5 Stunden langsam bis auf 260 °C Innentemperatur auf, wobei kontinuierlich zunächst das freie dann das durch Reaktion gebildete Ethylenglykol abdestilliert. Nachdem 115-120 g (ber. 124 g) Ethylenglykol abdestilliert sind und eine Innentemperatur von 260 °C erreicht ist, wird die Heizung abgestellt und der Ansatz unter Rühren und Stickstoff auf 60-80 °C abgekühlt.

In einem weiteren 10 Ltr.-Dreihalskolben (Kessel 2) werden 6 047 g destilliertes Wasser unter Rühren und Stickstoff auf 60 °C aufgeheizt. Unter Rühren wird nun die 60-80 °C heiße Schmelze aus Kessel 1 in das vorgelegte auf 60 °C erwärmte Wasser des Kessels 2 langsam eindosiert. Nach vollständiger Zugabe wird die entstandene wäßrige Dispersion noch 1 Stunde ohne weitere Heizung nachgerührt. Bei Raumtemperatur wird der Kesselinhalt über eine grobe Fritte oder Filtertuch abgelassen. Auf diese Weise erhält man eine lagerstabile 20 % Festkörper enthaltende, weiße Dispersion mit einer Viskosität von $\eta_{25\,°C}$ = 37 mPas.

## Beispiel 8

Eine Maschenware aus Polyesterethylenterephthalat vom Quadratmetergewicht 200 g wird in einem Labor-Jet der Fa. Mathiesen wie folgt behandelt.

Eine wäßrige Flotte, im Verhältnis 1 : 10 bezogen auf das Gewicht des Textilgutes, wird mit Essigsäure auf einen pH-Wert von ca. 5 gestellt.

Der Flotte wird 4 %, bezogen auf das Gewicht des Textilgutes, der in Beispiel 1 beschriebenen wäßrigen Dispersion des erfindungsgemäßen Polyetheresters zugesetzt. Nun wird die Temperatur auf 80 °C gesteigert und während 30 Minuten bei dieser Temperatur behandelt.

Anschließend erfolgt die Zugabe von 0,5 % C.I. Dispers Red 82 bezogen auf das Gewicht des Textilgutes.

Die Temperatur wird während 30 Minuten auf 130 °C erhöht und 30 Minuten bei dieser Temperatur behandelt.

Anschließend wird abgekühlt, gespült, durch abschleudern entwässert, 2 Minuten bei 120 °C getrocknet und 2 Minuten bei 160 °C nacherhitzt.

Im Gegensatz zu einem nur mit C.I. Disperse Red 82 gefärbten Textilgut zeigt die erfindungsgemäß behandelte Maschenware eine beachtliche, verbesserte Hydrophilie auch nach mehreren Wäschen. Die Hydrophilierungs-Effekte liegen auch gegenüber einem Mischpolyester, der gemäß der deutschen Offenlegungsschrift 21 29 993 aus zum Spinnen geeignetem Polyethylenterephthalat durch Umsatz mit Polyethylenglykol erhalten wird, wesentlich günstiger.

In den folgenden Beispielen bedeuten

I : unbehandeltes, gegebenenfalls gefärbtes bzw. aufgehelltes Textilgut

II : erfindungsgemäße Behandlung

III : handelsüblicher Mischpolyester

Prüfung der Hydrophilie nach der Steighöhenmethode nach DIN 53 924

DIN 53 924

| | nicht gewaschenes Textilgut Steighöhe nach 5 Minuten | nach 10 Maschinenwäschen bei 60°C Steighöhe nach 5 Minuten |
|---|---|---|
| I | 25 | 38 mm |
| II | 138 | 126 mm |
| III | 110 | 108 mm |

Das erfindungsgemäß behandelte Textilgut zeigt außerdem einen verbesserten Warengriff gegenüber einem nur gefärbten Textil aber auch gegenüber den erwähnten handelsüblichen Mischpolyester.

Der Oberflächenwiderstand der erfindungsgemäß behandelten Maschenware wird gegenüber den Vergleichen ebenfalls deutlich vermindert :

I : $1.10^{13}$ Ohm
II : $2.10^{9}$ Ohm
III : $5.10^{10}$ Ohm

Die erfindungsgemäß behandelte Maschenware zeigt außerdem ein gutes Soil-release und Soilredepositionverhalten, ist also hervorragend pflegeleicht.

Gegenüber dem erwähnten handelsüblichen Mischpolyester sind die Flottenansätze der wäßrigen Dispersion mit dem erfindungsgemäßen Polyetherester beachtlich stabiler.

Beispiel 9

Ein Gewebe aus Polyesterethylenglykolterephthalat vom Quadratmetergewicht 220 g wird mit einer wäßrigen Flotte behandelt, die im Liter 15 g Fluorescent Brightener 199, und 65 g der im Beispiel 1 beschriebenen wäßrigen Dispersion des erfindungsgemäßen Polyetheresters enthält. Das Textilgut wird in die wäßrige Flotte getaucht und auf 70 % Naßaufnahme abgequetscht.

Es wird 1 Minute bei 130 °C getrocknet und anschließend 20 Sekunden bei 180 °C nacherhitzt.

Im Gegensatz zu einem nur mit Fluorescent Brightener 199 behandelten Textilgut zeigt das erfindungsgemäß behandelte Gewebe einen sehr guten Hydrophilierungseffekt, der gegen mehrfache Wäsche beständig ist.

Das erfindungsgemäß behandelte Textilgut zeigt aber auch im Vergleich zu dem in Beispiel 8 erwähnten, handelsüblichen Mischpolyester ein deutlich besseres hydrophiles Verhalten.

Das erfindungsgemäß behandelte Textilgut zeigt außerdem einen verbesserten Warengriff gegenüber einem nur gefärbten Textil aber auch gegenüber dem erwähnten handelsüblichen Mischpolyester.

Der Oberflächenwiderstand der erfindungsgemäß behandelten Maschenware wird gegenüber den Vergleichen ebenfalls deutlich vermindert :

I : $1.10^{13}$ Ohm
II : $2.10^{9}$ Ohm
III : $5.10^{10}$ Ohm

Die erfindungsgemäß behandelte Maschenware zeigt außerdem ein gutes Soil-release und Soilredepositionsverhalten.

Gegenüber dem erwähnten handelsüblichen Mischpolyester sind die Flottenansätze der wäßrigen Dispersion mit dem erfindungsgemäßen Polyetherester beachtlich stabiler.

Prüfung der Hydrophilie nach der Steighöhenmethode nach DIN 53 924

| | nicht gewaschenes Textilgut Steighöhe nach 5 Minuten | nach 10 Maschinenwäschen bei 60°C Steighöhe nach 5 Minuten |
|---|---|---|
| I | 22 | 38 mm |
| II | 143 | 136 mm |
| III | 120 | 118 mm |

Das erfindungsgemäß behandelte Textilgut hat außerdem gegenüber dem nur mit Fluorescent Brightener 199 behandeltem Gewebe, aber auch gegenüber einer Behandlung mit dem zuvor erwähnten, handelsüblichen Mischpolyester, einen hervorragend weichen, geschmeidigen Warengriff.

Das erfindungsgemäß behandelte Textilgut verhält sich gegenüber dem oben angeführten Vergleich besonders gut im pflegeleichten Verhalten.

So zeigt z. B. das erfindungsgemäß behandelte Textilgut bei Behandlung mit einer Schmutzlösung im Verhältnis 1 : 50 während 15 Minuten bei 60 °C nach dem Spülen mit kaltem Wasser keine Verschmutzung.

Das nicht erfindungsgemäß, nur mit Fluorescent Brightener 199 behandelte Textilgut erscheint hingegen stark angeschmutzt. Das mit dem handelsüblichen Mischpolyester behandelte Gewebe erscheint gering verschmutzt.

Die Schmutzlösung enthält 2 g Gasruß im Liter Wasser dispergiert mit 0,5 g eines handelsüblichen Waschmittels.

Das erfindungsgemäß behandelte Gewebe ermöglicht gleichfalls eine bessere Schmutzauswaschbarkeit gegenüber einem nicht mit dem erfindungsgemäßen Polyetherester behandelten Textilgut, sowie gegenüber einer Behandlung mit den erwähnten handelsüblichen Mischpolyester. Beim Auftrag folgender Schmutzlösung auf das Textilgut wird bei einer Maschinenwäsche bei 60 °C mit einem handelsüblichen Waschmittel bei dem erfindungsgemäß behandelten Textilgut eine vollständige Schmutzablösung erreicht. Das nicht mit dem erfindungsgemäßen Polyetherester behandelte Textilgut erscheint nach der Wäsche angeschmutzt. Das mit dem handelsüblichen Mischpolyester behandelte Textilgut zeigt eine geringe Anschmutzung.

Schmutzlösung : 20 g Ringertalg, 30 Mineralöl, 15 g Straßenstaub (Imitation) werden in Trichlorethylen gelöst, dispergiert und zu einem Liter ergänzt. Der Schmutzauftrag erfolgt mittels Pipette, wobei 1 ml Schmutzlösung auf das Textil aufgebracht wird.

Nach 12-stündiger Einwirkungszeit erfolgt die zuvor genannte Wäsche in einer Haushaltswaschmaschine.

## Beispiel 10

Eine Maschenware aus Polyethylenglykolterephthalat von 200 g Quadratmetergewicht wird mit einer wäßrigen Flotte behandelt, die im Liter 50 g der in Beispiel 2 beschriebenen wäßrigen 15 %igen Dispersion des erfindungsgemäßen Polyetheresters enthält.

Die Maschenware wird in die wäßrige Flotte getaucht und auf 80 % Naßaufnahme abgequetscht. Dann wird 2 Minuten bei 120 °C getrocknet und 1 Minute bei 170 °C nacherhitzt. Das erfindungsgemäß behandelte Textilgut zeigt im Vergleich zu einem nicht behandelten Muster eine verbesserte Hydrophilie. Der Effekt ist gegen mehrfache Wäschen beständig.

Prüfung der Hydrophilie nach der Steighöhenmethode nach DIN 53 924

(Siehe Tabelle Seite 9 f.)

| | nicht gewaschenes Textilgut Steighöhe nach 5 Minuten | nach 10 Maschinenwäschen bei 60°C Steighöhe nach 5 Minuten |
|---|---|---|
| I | 25 | 40 mm |
| II | 139 | 131 mm |

Die erfindungsgemäß behandelte Maschenware hat gegenüber dem unbehandelten Textil einen besonders guten, glatten, geschmeidigen Warengriff.

Darüber hinaus ist das pflegeleichte Verhalten der erfindungsgemäß behandelten Maschenware ausgezeichnet.

Der Oberflächenwiderstand wird gegenüber dem Vergleich von $1.10^{13}$ Ohm auf $4.10^{9}$ Ohm erniedrigt.

## Beispiel 11

Eine Maschenware aus Polyesterethylenglykolterephthalat vom Quadratmetergewicht 200 g wird mit 4 % Disperse Red 82, bezogen auf das Gewicht des Textilgutes, nach dem HT-Färbeverfahren bei 130 °C gefärbt.

Anschließend wird wie üblich mit Natronlauge und Natriumdithionit reduktiv gereinigt.

Nach dem Spülen wird das letzte, 40 °C warme Spülbad mit Essigsäure auf einen pH-Wert von 4-5 gestellt. Dann wird 4 %, bezogen auf das Gewicht des Textilgutes, der in Beispiel 3 beschriebenen wäßrigen 20 %igen Dispersion des erfindungsgemäßen Polyetheresters zugesetzt. Die Temperatur wird auf 90 °C gesteigert und bei dieser Temperatur während 30 Minuten behandelt. Dann wird abgekühlt und durch Abschleudern das Textilgut entwässert. Das Textilgut wird dann bei 120 °C während 2 Minuten getrocknet und während 2 Minuten bei 160 °C nacherhitzt.

Das erfindungsgemäß behandelte Textilgut zeigt im Vergleich zu einem nur mit Dispers Red 82 gefärbten Muster eine erheblich verbesserte Hydrophilie.

Prüfung der Hydrophilie nach der Steighöhenmethode nach DIN 53 924

| | nicht gewaschenes Textilgut Steighöhe nach 5 Minuten | nach 10 Maschinenwäschen bei 60°C Steighöhe nach 5 Minuten |
|---|---|---|
| I | 25 | 38 mm |
| II | 115 | 110 mm |

Das erfindungsgemäß behandelte Textilgut zeigt einen guten Warengriff und ein gutes pflegeleichtes Verhalten. Der Oberflächenwiderstand ist zu dem Vergleich von $1.10^{13}$ Ohm auf $2.10^{10}$ Ohm vermindert.

## Beispiel 12

Eine Maschenware aus Polyesterethylenglykolterephthalat vom Quadratmetergewicht 180 g wird in einem Labor-Jet der Fa. Mathiesen wie folgt behandelt.

Eine wäßrige Flotte im Verhältnis 1 : 8 bezogen auf das Textilgut, wird mit Essigsäure auf einen pH-Wert von ca. 5 gestellt. Dann wird der 40 °C warmen Flotte 5 %, bezogen auf das Gewicht des Textilgutes, der in Beispiel 4 beschriebenen wäßrigen Dispersion des erfindungsgemäßen Polyetheresters zugegeben. Dann erfolgt ein Zusatz von 0,3 % Disperse Red 82, bezogen auf das Gewicht des Textilgutes. Die Temperatur wird während 40 Minuten auf 130 °C gesteigert. Bei dieser Temperatur wird 30 Minuten behandelt.

Es wird abgekühlt, mit Wasser gespült und durch Abschleudern entwässert.

Dann wird 2 Minuten bei 160 °C getrocknet.

Die erfindungsgemäß behandelte Maschenware zeigt einen angenehmen Warengriff und gutes pflegeleichtes Verhalten sowie eine verbesserte Hydrophilie.

Prüfung der Hydrophilie nach der Steighöhenmethode nach DIN 53 924

| | nicht gewaschenes Textilgut Steighöhe nach 5 Minuten | nach 10 Maschinenwäschen bei 60°C Steighöhe nach 5 Minuten |
|---|---|---|
| I | 28 | 40 mm |
| II | 119 | 110 mm |

Der Oberwiderstand wird gegenüber dem nicht erfindungsgemäß behandelten Textilgut von $1.10^{13}$ auf $3.10^{10}$ vermindert.

Beispiel 13

Eine Gewebe aus Polyesterethylenglykolterephthalat vom Quadratmetergewicht 220 g wird mit einer wäßrigen Flotte behandelt, die im Liter 40 g der in Beispiel 5 beschriebenen wäßrigen Dispersion des erfindungsgemäßen Polyetheresters enthält.

Das Gewebe wird in die wäßrige Flotte getaucht und auf 80 % Naßaufnahme abgequetscht.

Dann wird 2 Minuten bei 120 °C getrocknet und 15 Sekunden bei 200 °C nacherhitzt.

Das erfindungsgemäß behandlete Gewebe ist in dem hydrophilen Verhalten wesentlich verbessert. Die Effekte sind gegen mehrfache Wäschen beständig.

Prüfung der Hydrophilie nach der Steighöhenmethode nach DIN 53 924

| | nicht gewaschenes Textilgut Steighöhe nach 5 Minuten | nach 10 Maschinenwäschen Steighöhe nach 5 Minuten |
|---|---|---|
| I | 18 | 35 mm |
| II | 128 | 120 mm |

Das erfindungsgemäß behandelte Textilgut zeigt einen besonders weichen und eleganten Warengriff sowie ein gutes pflegeleichtes Verhalten. Der Oberflächenwiderstand wird gegenüber dem Vergleich von $1.10^{13}$ Ohm auf $2.10^{10}$ vermindert.

Beispiel 14

Eine Maschenware aus Polyesterethylenglykolterephthalat vom Quadratmetergewicht 200 g wird mit einer wäßrigen Flotte behandelt, die im Liter 4 %, bezogen auf das Gewicht des Textilgutes, der in Beispiel 6 beschriebenen wäßrigen Dispersion des erfindungsgemäßen Polyetheresters enthält. Die Flotte enthält außerdem 1 % Disperse Red 82 und 4 % eines handelsüblichen Färbebeschleunigers, bezogen auf das Gewicht des Textilgutes. Das Verhältnis von Textilgut zur Flotte beträgt 1 : 20.

Die Temperatur der wäßrigen Flotte wird von 40 °C innerhalb von 40 Minuten auf 100 °C gesteigert. Dann wird bei dieser Temperatur 60 Minuten behandelt. Es wird mit Wasser gespült und durch Abqeutschen entwässert. Das Textilgut wird dann bei 120 °C während 2 Minuten getrocknet und 2 Minuten bei 160 °C nacherhitzt.

Das erfindungsgemäß behandelte Textilgut zeigt eine wesentlich verbesserte Hydrophilie, die gegen mehrfache Wäschen beständig ist.

Prüfung der Hydrophilie nach der Steighöhenmethode nach DIN 53 924

| | nicht gewaschenes Textilgut Steighöhe nach 5 Minuten | nach 10 Maschinenwäschen bei 60°C Steighöhe nach 5 Minuten |
|---|---|---|
| I | 25 | 38 mm |
| II | 132 | 130 mm |

Das erfindungsgemäß behandelte Textilgut zeigt einen angenehmen Warengriff und ein gutes pflegeleichtes Verhalten. Der Oberflächenwiderstand wird gegenüber dem Vergleich von $1.10^{13}$ Ohm auf $3.10^{10}$ Ohm vermindert.

Beispiel 15

Eine Maschenware aus Polyesterethylenglykolterephthalat vom Quadratmetergewicht 200 g wird mit einer wäßrigen Flotte behandelt, die in Liter 45 g der in Beispiel 7 beschriebenen wäßrigen Dispersion des erfindungsgemäßen Polyetheresters enthält. Die Maschenware wird in die wäßrige Flotte getaucht und auf 80 % Naßaufnahme abgequetscht. Dann wird bei 170 °C während 2 Minuten getrocknet.

Die erfindungsgemäß behandelte Maschenware zeigte einen angenehmen Warengriff, pflegeleichtes Verhalten und eine verbesserte Hydrophilie.

Prüfung der Hydrophilie nach der Steighöhenmethode nach DIN 53 924

| | nicht gewaschenes Textilgut Steighöhe nach 5 Minuten | nach 10 Maschinenwäschen bei 60°C Steighöhe nach 5 Minuten |
|---|---|---|
| I | 25 | 38 mm |
| II | 132 | 125 mm |

Das erfindungsgemäß behandelte Textilgut zeigt gegenüber dem Vergleich eine Verminderung des Oberflächenwiderstandes von $1.10^{13}$ Ohm auf $5.10^{10}$ Ohm.

Beispiel 16

Ein Gewebe aus 50 % Polyesterethylenglykolterephthalat und 50 % Baumwolle vom Quadratmetergewicht 150 g wird mit einer wäßrigen Flotte behandelt, die im Liter 50 g der im Beispiel 1 beschriebenen wäßrigen Dispersion des erfindungsgemäßen Polyetheresters enthält. Das Gewebe wird in die Flotte getaucht und auf 90 % Naßaufnahme abgequetscht. Dann wird 2 Minuten bei 130 °C getrocknet und 2 Minuten bei 160 °C nacherhitzt.

Das erfindungsgemäß behandelte Gewebe zeigt einen angenehmen Warengriff, ein gutes Pflegeleichtverhalten und verbesserte Hydrophilie.

Prüfung der Hydrophilie nach der Steighöhenmethode nach DIN 53 924

| | nicht gewaschenes Textilgut Steighöhe nach 5 Minuten | nach 5 Maschinenwäschen bei 60°C Steighöhe nach 5 Minuten |
|---|---|---|
| I | 55 | 81 mm |
| II | 122 | 118 mm |

Der Oberflächenwiderstand des erfindungsgemäß behandelten Gewebes wird gegenüber dem Vergleich von $3.10^{10}$ Ohm auf $2.10^{7}$ vermindert.

Beispiel 17

Ein Gewebe aus 70 % Wolle und 30 % Polyesterethylenglykolterephthalat vom Quadratmetergewicht 250 g wurde mit einer wäßrigen Flotte behandelt, die im Liter 60 g der in Beispiel 2 beschriebenen wäßrigen Dispersion des erfindungsgemäßen Polyetheresters enthält.

Das erfindungsgemäß behandelte Gewebe zeigt einen angenehmen, weichen Warengriff, gutes Pflegeleichtverhalten und verbesserte Hydrophilie.

Prüfung der Hydrophilie nach der Steighöhenmethode nach DIN 53 924

| | Steighöhe nach 5 Minuten |
|---|---|
| I | 5 mm |
| II | 95 mm |

Der Oberflächenwiderstand des erfindungsgemäß behandelten Gewebes gegenüber dem Vergleich wurde von $1.10^{10}$ Ohm auf $2.10^{9}$ Ohm vermindert.

Beispiel 18

Ein Gewebe aus Polyamid vom Quadratmetergewicht 160 g wurde mit einer wäßrigen Flotte behandelt, die in Liter 40 g der in Beispiel 1 beschriebene wäßrigen Dispersion des erfindungsgemäßen Polyetheresters enthält.

Das Gewebe wurde in die wäßrige Flotte getaucht und auf 70 % Naßaufnahme abgequetscht. Dann wurde das Gewebe 2 Minuten bei 170 °C getrocknet.

Das erfindungsgemäß behandelte Gewebe aus Polyamid zeigt eine verbesserte Hydrophilie und gutes Pflegeleichtverhalten.

Prüfung der Hydrophilie nach der Steighöhenmethode nach DIN 53 924

| | nicht gewaschenes Gewebe Steighöhe nach 5 Minugen | nach 3 Maschinenwäschen bei 60°C Steighöhe nach 5 Min. |
|---|---|---|
| I | 20 | 25 mm |
| II | 85 | 80 mm |

Der Oberflächenwiderstand des erfindungsgemäß behandelten Gewebes zum Vergleich wurde vermindert von $2.10^{12}$ Ohm auf $3.10^{9}$ Ohm.

Beispiel 19

Ein Gewebe aus 50 % Polyesterethylenglykolterephthalat und 50 % Baumwolle vom Quadratmetergewicht 150 g wird mit einer wäßrigen Flotte behandelt, die im Liter 60 g der in Beispiel 1 beschriebenen wäßrigen Dispersion des erfindungsgemäßen Polyetheresters enthält, sowie 50 g Dimethyloldihydroxyethylenharnstoff und 20 g Magnesium-chloridhexahydrat.

Das Gewebe wird in die Flotte getaucht und auf 80 % Naßaufnahme abgequetscht.

Dann wird 2 Minuten bei 120 °C getrocknet und 4 Minuten bei 160 °C nacherhitzt.

Im Gegensatz zu einem Textilgut, das nur mit Dimethyloldihydroxyethylenharnstoff und Magnesiumchloridhexahydrat behandelt wurde, zeigt das erfindungsgemäß behandelte Gewebe eine verbesserte Hydrophilie und gutes pflegeleichtes Verhalten.

Prüfung der Hydrophilie nach der Steighöhenmethode nach DIN 53 924

| | nicht gewaschnes Textilgut Steighöhe nach 5 Minuten | nach 5 Maschinenwäschen bei 60°C Steighöhe nach 5 Minuten |
|---|---|---|
| I | 5 | 8 mm |
| II | 95 | 90 mm |

Knitterverhalten

Trockenknittererholungswinkel nach DIN 53 890

| | nicht gewaschnes Textilgut | nach 5 Maschinenwäschen bei 60°C |
|---|---|---|
| I | 145° | 141° |
| II | 146° | 143° |

Wie ersichtlich wird das Knitterverhalten durch die erfindungsgemäße Behandlung nicht vermindert.

Beispiel 20

Ein Gewebe aus 70 % Wolle und 30 % Polyesterethylenglykolterephthalat vom Quadratmetergewicht 250 g wird mit einer wäßrigen Flotte behandelt, die im Liter 70 g der im Beispiel 1 beschriebenen

wäßrigen Dispersion des erfindungsgemäßen Polyetheresters enthält, sowie 10 g einer wäßrigen, handelsüblichen 50 %igen Lösung eines Bisulfitblockierten Isocyanatpräpolymeren, 10 g einer handelsüblichen, 40 %igen wäßrigen, anionischen Polyester-Polyurethandispersion und 3 g Natriumhydrogencarbonat enthält. Das Textilgut wird in die wäßrige Flotte getaucht und auf 90 % Naßaufnahme abgequetscht.

Es wird dann 3 Minuten bei 140 °C getrocknet und 1 Minute mit Wasserdampf von 6 bar behandelt.

Das erfindungsgemäß behandelte Textilgut zeigt im Gegensatz zu einem Vergleich ohne Zusatz des erfindungsgemäßen Polyetheresters ein verbessertes hydrophiles Verhalten und gute Pflegeleichteigenschaften.

Prüfung der Hydrophilie nach der Steighöhenmethode nach DIN 53 924

| | nicht gewaschenes Textilgut Steighöhe nach 5 Minuten | nach 3 Maschinenwäschen bei 40°C Steighöhe nach 5 Minuten |
|---|---|---|
| I | 5 | 8 mm |
| II | 81 | 80 mm |

Die filzfreimachende Wirkung des Bisulfit-blockierten Isocyanat-Präpolymeren auf den keratinhaltigen Faser-anteil wird nicht beeinträchtigt, wie nachstehende Tabelle zeigt :

Filzschrumpf nach 3 Maschinenwäschen bei 40 °C

| | Kette | |
|---|---|---|
| I | 1,5 | 0,8 % |
| II | 1,4 | 0,8 % |

**Patentansprüche**

1. Wasserlösliche oder in Wasser dispergierbare segmentierte Polyetherester einer überwiegend linearen Molekularstruktur mit einem Gehalt an

a) Terephthalatgruppen der Formel

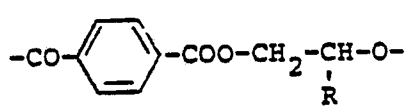

worin R Wasserstoff oder Methyl bedeutet, von 3-45 Gew.-%,

b) Terephthalatgruppen der Formel

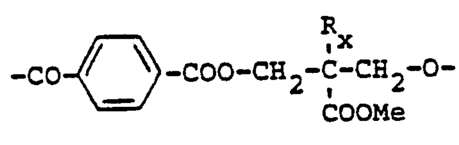

worin

$R_x$ Wasserstoff oder $C_1$-$C_4$-Alkyl und

$M_e$ ein Alkali- oder Ammoniumion

bedeuten, von 0,4-6 Gew.-% und

c) endständigen Polyalkylenglykol-Gruppen von 49-96,6 Gew.-%,

jeweils bezogen auf das Gewicht des Polyetheresters, und einem mittleren Molekulargewicht von 500-11 000.

2. Polyetherester nach Anspruch 1, dadurch gekennzeichnet, daß ihr mittleres Molekulargewicht zwischen 1 000 und 6 000 liegt.

3. Polyetherester nach Anspruch 1, dadurch gekennzeichnet, daß

$R_x$ für Wasserstoff oder $C_1$-$C_4$-Alkyl,

Me für Li, Na, K oder

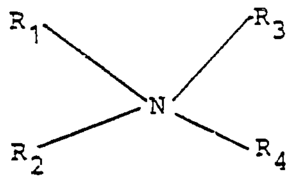

und

$R_1$, $R_2$, $R_3$ und $R_4$ für Wasserstoff oder $C_1$-$C_{20}$-Alkyl, das durch OH oder $NH_2$ substituiert sein kann, stehen, und daß Komponente c) einen Ethylen- oder Propylenglykol-ether oder einen gemischten Ethylen-propylenglykol-ether der Formel

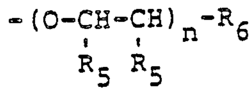

darstellt, worin

$R_5$ für Wasserstoff und/oder Methyl,
$R_6$ für $C_1$-$C_{20}$-Alkoxy oder Di-$C_1$-$C_{20}$-alkyl-amino und
n für 10-220, bevorzugt 15-120 stehen.

4. Polyetherester nach Anspruch 1, dadurch gekennzeichnet, daß der Gehalt an

a) 10-20 Gew.-%,
b) 1- 3 Gew.-% und
c) 70-90 Gew.-%

beträgt und die Komponente c) einen Polyetherglykol-monoalkylether oder einen gemischten Polyethylenpropylenglykol-monoalkylether darstellt.

5. Verfahren zur Herstellung von Polyetherestern des Anspruchs 1, dadurch gekennzeichnet, daß man Terephthalsäuredimethylester mit Ethylenglykol und Salzen von Säuren der Formel

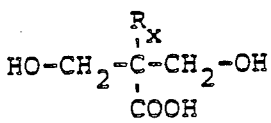

mit $R_x$ = Wasserstoff oder $C_1$-$C_4$-Alkyl in Gegenwart von Veresterungskatalysatoren zu Prepolymeren umsetzt, wobei das Mengenverhältnis so gewählt wird, daß pro Hydroxylgruppe des Glykols $0,1.10^{-4}$ bis 0,21 Carboxylgruppen vorliegen, und diese anschließend mit monofunktionellen eine Hydroxylgruppe aufweisenden Polyalkylenglykolen umsetzt.

6. Verfahren zur Veredlung von Textilmaterialien aus Synthesefasern und ihren Mischungen mit Cellulosefasern oder keratinhaltigen Fasern, dadurch gekennzeichnet, daß man die Fasern mit Polyetherestern des Anspruchs 1 behandelt.

7. Verfahren nach Anspruch 6, dadurch gekennzeichnet, daß man als Synthesefasern Polyesterfasern behandelt.

8. Verfahren nach Anspruch 6, dadurch gekennzeichnet, daß man die Behandlung aus wäßriger Flotte nach dem Auszieh-, Klotz- oder Sprühverfahren durchführt.

**Claims**

1. Water-soluble or water-dispersible segmented polyetheresters having a predominantly linear molecular structure and containing

a) 3-45 % by weight of terephthalate groups of the formula

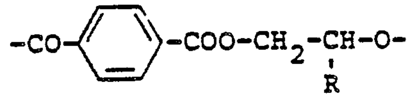

wherein R denotes hydrogen or methyl,

b) 0.4-6 % by weight of terephthalate groups of the formula

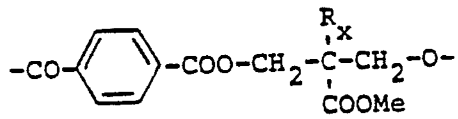

wherein
$R_x$ denotes hydrogen or $C_1$-$C_4$-alkyl and
Me denotes an alkali metal or ammonium ion, and
c) 49-96.6 % by weight of terminal polyalkylene glycol groups, all the weights being relative to that of the polyetherester, and having an average molecular weight of 500-11,000.

2. Polyetheresters according to Claim 1, characterised in that their average molecular weight is between 1,000 and 6,000.

3. Polyetheresters according to Claim 1, characterised in that
$R_x$ represents hydrogen or $C_1$-$C_4$-alkyl,
Me represents Li, Na, K or

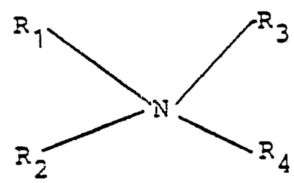

and $R_1$, $R_2$, $R_3$ and $R_4$ each represent hydrogen or $C_1$-$C_{20}$-alkyl which can be substituted by OH or $NH_2$, and that component c) is an ethylene or propylene glycol ether or a mixed ethylene/propylene glycol ether of the formula

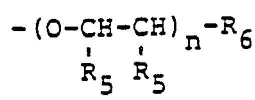

wherein
$R_5$ represents hydrogen and/or methyl,
$R_6$ represents $C_1$-$C_{20}$-alkoxy or di-$C_1$-$C_{20}$-alkylamino and
n represents 10-220, preferably 15-120.

4. Polyetheresters according to Claim 1, characterised in that they contain 10-20 % by weight of a), 1-3 % by weight of b), and 70-90 % by weight of c), and that component c) is a polyethylene glycol monoalkyl ether or a mixed polyethylene/propylene glycol monoalkyl ether.

5. Process for preparing polyetheresters of Claim 1, characterised in that dimethyl terephthalate is reacted with ethylene glycol and salts of acids of the formula

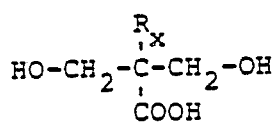

where $R_x$ = hydrogen or $C_1$-$C_4$-alkyl, in the presence of esterification catalysts to give prepolymers, the quantities in this reaction being so chosen that $0.1 \times 10^{-4}$ to 0.21 carboxyl groups are present per hydroxyl group of the glycol, and these are then reacted with monofunctional polyalkylene glycols having a hydroxyl group.

6. Process for finishing textile materials made of synthetic fibres and their mixtures with cellulosic fibres or keratin-containing fibres, characterised in that the fibres are treated with polyetheresters of Claim 1.

7. Process according to Claim 6, characterised in that the synthetic fibres treated are polyester fibres.

8. Process according to Claim 6, characterised in that the treatment is carried out from an aqueous liquor using the exhaust, padding or spraying method.

**Revendications**

1. Polyétherester segmenté, hydrosoluble ou dispersable dans l'eau, ayant une structure moléculaire surtout linéaire présentant :
a) une teneur de 3 à 45 % en poids de groupes téréphtalates de formule :

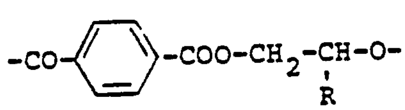

dans laquelle R représente un atome d'hydrogène ou un groupe méthyle,

b) une teneur de 0,4 à 6 % en poids de groupes téréphtalates de formule :

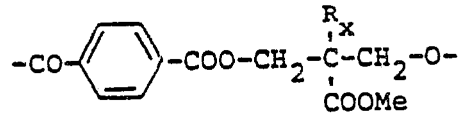

dans laquelle

$R_x$ représente un atome d'hydrogène ou un groupe alkyle en $C_1$-$C_4$, et

Me représente un ion alcalin ou ammonium, et

c) une teneur de 49 à 96,6 % en poids en des groupes polyalkylèneglycols terminaux, les pourcentages étant chaque fois rapportés au poids du polyétherester, et ayant un poids moléculaire moyen allant de 500 à 11 000.

2. Polyétherester selon la revendication 1, caractérisé en ce que son poids moléculaire moyen se situe entre 1 000 et 6 000.

3. Polyétherester selon la revendication 1, caractérisé en ce que

$R_x$ représente un atome d'hydrogène ou un groupe alkyle ayant 1 à 4 atomes de carbone,

Me représente Li, Na, K ou

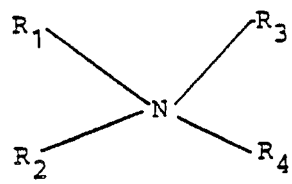

et

$R_1$, $R_2$, $R_3$ et $R_4$ représentent chacun un atome d'hydrogène ou un groupe alkyle en $C_1$-$C_{20}$, pouvant porter comme substituant OH ou $NH_2$, et en ce que le composant c) représente un éther-oxyde d'éthylèneglycol ou de propylèneglycol ou un éther oxyde-mixte d'éthylèneglycol ou de propylèneglycol, de formule

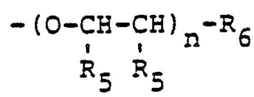

dans laquelle

$R_5$ représente un atome d'hydrogène et/ou un groupe méthyle,

$R_6$ représente un groupe alcoxy en $C_1$-$C_{20}$ ou un groupe di(alkyl en $C_1$-$C_{20}$) amino, et

n vaut 100 à 220, de préférence 15 à 120.

4. Polyétherester selon la revendication 1, caractérisé en ce qu'il possède une teneur de

10 à 20 % en poids de a),
1 à 3 % en poids de b), et
70 à 90 % en poids de c),

et en ce que le composant c) représente un éther monoalkylique de polyéthylèneglycol ou un éther monoalkylique mixte de polyéthylèneglycol et polypropylèneglycol.

5. Procédé de préparation de polyétheresters selon la revendication 1, caractérisé en ce qu'on fait réagir du téréphtalate de diméthyle avec l'éthylèneglycol et avec des sels d'acide de formule :

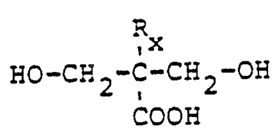

dans laquelle $R_x$ représente un atome d'hydrogène ou un groupe alkyle en $C_1$-$C_4$, en opérant en présence de catalyseurs d'estérification pour obtenir des prépolymères, en choisissant le rapport pondéral de façon qu'il y ait, par groupe hydroxyle du glycol, $0{,}1.10^{-4}$ à 0,21 groupe carboxyles, et l'on fait réagir les prépolymères ensuite avec des polyalkylèneglycols monofonctionnels présentant un groupe hydroxyle.

6. Procédé d'apprêt et/ou d'ennoblissement de matières textiles en des fibres synthétiques et en leurs mélanges avec des fibres de cellulose ou des fibres contenant de la kératine, procédé caractérisé en ce qu'on traite les fibres par des polyétheresters selon la revendication 1.

7. Procédé selon la revendication 6, caractérisé en ce qu'on traite, comme fibres synthétiques, des fibres de polyester.

8. Procédé selon la revendication 6, caractérisé en ce qu'on conduit le traitement en bain aqueux selon le procédé par épuisement, par foulardage ou par projection par pulvérisation.